# EUROPÄISCHE PATENTSCHRIFT

(11) **EP 3 833 620 B1**
(45) Veröffentlichungstag und Bekanntmachung des Hinweises auf die Patenterteilung: **22.11.2023**
(21) Anmeldenummer: 19748771.3
(22) Anmeldetag: 25.07.2019
(51) Int. Cl.: B65G 67/04, B65G 67/06, G06Q 10/08

(54) **SYSTEM ZUM KONTINUIERLICHEN BELADEN VON NUTZFAHRZEUGEN**
SYSTEM FOR CONTINUOUSLY LOADING UTILITY VEHICLES
SYSTÈME DE CHARGE CONTINUEL DE VÉHICULES UTILITAIRES

(30) Priorität: 06.08.2018 DE 102018213079
(43) Veröffentlichungstag der Anmeldung: 16.06.2021
(73) Patentinhaber: FLSmidth A/S, 2500 Valby (DK)
(72) Erfinder: NARO, Daniele, 45899 Gelsenkirchen (DE)
(86) Internationale Anmeldenummer: PCT/EP2019/070091
(87) Internationale Veröffentlichungsnummer: WO 2020/030439

(56) Entgegenhaltungen:
- WO-A1-2015/197133
- CN-A- 103 970 063
- CN-A- 107 479 488
- CN-U- 203 187 128
- DE-U1- 29 722 544

## Beschreibung

### TECHNISCHES GEBIET

Die Erfindung betrifft ein System zum kontinuierlichen Beladen von Nutzfahrzeugen mit Material nach Anspruch 1. Weiterhin betrifft die Erfindung ein Verfahren zum Beladen von Nutzfahrzeugen des vorgenannten Systems.

### HINTERGRUND

Allgemein bekannt ist, dass Nutzfahrzeuge mit Material beschickt werden. Allerdings ist keine vollständig kontinuierliche Beladung der Nutzfahrzeuge durch eine Mehrwegschurre bekannt. Aus der WO 2015/197133 A1 ist beispielsweise ein System zum kontinuierlichen Beladen von Nutzfahrzeugen mit Material mit einer in unterschiedliche Schaltzustände schaltbaren Schurre bekannt, um Nutzfahrzeuge nacheinander mit Material zu beschicken, welches ein Durchfahrtregelungssystem mit einem den Nutzfahrzeugen zugeordneten Durchfahrtregelungselement und einem den Nutzfahrzeugen zugeordneten Präsenzsensor eines Präsenssensorsystems aufweist.

### BESCHREIBUNG DER ERFINDUNG

Es ist daher Aufgabe der Erfindung ein System und ein Verfahren der vorgenannten Art zu schaffen, wobei die Beschickungseffizienz der Nutzfahrzeuge durch die Mehrwegschurre verbessert werden soll.

Zur Lösung dieser Aufgabe sieht die Erfindung insbesondere ein System zum kontinuierlichen Beladen von Nutzfahrzeugen mit Material vor, aufweisend mindestens eine in unterschiedliche Schaltzustände schaltbare Mehrwegschurre, um unterschiedliche Nutzfahrzeuge nacheinander mit Material zu beschicken, wobei die Mehrwegschurre insbesondere eine Hosenschurre ist. Eine Hosenschurre dient zur Verzweigung des Materialstroms mittels Schwerkraft. Weiterhin umfasst das System mindestens drei Nutzfahrzeuge. Um eine kontinuierliche Beladung zu gewährleisten werden mehr als drei Nutzfahrzeuge bevorzugt. Dies gilt insbesondere, wenn die Nutzfahrzeuge oder die Be- und Entladestelle hunderte oder tausende Meter voneinander entfernt stehen. So kann eine kontinuierliche Beschickung noch weiter gewährleistet werden. Die Nutzfahrzeuge sind in mindestens zwei Reihen angeordnet, nämlich mindestens zwei Nutzfahrzeuge in einer Vorderreihe und mindestens ein Nutzfahrzeug in mindestens einer Folgereihe, wobei mindestens einem Nutzfahrzeug der Vorderreihe entgegen seiner Fahrtrichtung das mindestens eine Nutzfahrzeug ungefüllt in der mindestens einen Folgereihe ansteht. Ebenso umfasst das System ein Durchfahrtregelungssystem, wobei jedem Nutzfahrzeug ein Durchfahrtregelungselement zugeordnet ist. Weiterhin umfasst das System ein Präsenssensorsystem, wobei jedem Nutzfahrzeug ein Präsenssensor zugeordnet ist. Ein Materialfüllstanderfassungssystem ist ferner vorgesehen, wobei jedem Nutzfahrzeug der Vorderreihe ein Materialfüllstanderfassungssensor zugeordnet ist. Weiterhin wesentlich weist das System ein Computersystem auf, um den Schaltzustand der Mehrwegschurre anhand der Daten des Präsenssensorsystems und des Materialfüllstanderfassungssystems zu steuern.

Die numerische Formulierung der Nutzfahrzeuge, nämlich insbesondere erste, zweite und dritte Nutzfahrzeuge, ist nicht limitierend zu verstehen, sondern soll das Verständnis der Figuren erleichtern. Sobald sich der Prozess wiederholt, ist die numerische Folge grundsätzlich hinfällig. Es kann sich insbesondere um baugleiche Nutzfahrzeuge handeln, sodass diese Formulierung mit aufsteigender Nummerierung nur genutzt wird, um die Erfindung deutlicher zu beschreiben. Das ursprünglich erste Nutzfahrzeug kann beim erneuten Einfahren eine andere Nummerierung erhalten. Bei einer eindeutigen Identifizierung der Nutzfahrzeuge sind auch nichtbaugleiche Fahrzeuge denkbar. Diese können dann dem Computersystem vor der jeweiligen Beschickung bekannt sein. Die individuellen Nutzfahrzeugdaten können dann im Computersystem hinterlegt sein.

Die vorgenannten Teilsysteme des gesamten Systems, nämlich das Präsenssensorsystem und das Materialfüllstanderfassungssystem, sind geeignet, um Daten zu erfassen, die durch das Computersystem ausgewertet werden und somit eine möglichst vorteilhafte Steuerung des Durchfahrtregelungssystems und somit der zu befüllenden Nutzfahrzeuge ermöglichen, sodass diese kontinuierlich beschickt werden können.

Besonders bevorzugt ist vorgesehen, dass nur die Nutzfahrzeuge der Vorderreihe durch die Mehrfachschurre mit Material zu beschicken sind. Insbesondere, wenn die Vorderreihe und die mindestens eine Folgereihe weit voneinander entfernt sind, erlaubt dies eine einfache Gestaltung der Mehrfachschurre.

Dabei ist die Mehrfachschurre insbesondere eine Zweifachschurre, eine Dreifachschurre oder eine Vierfachschurre. Mit jeder Zunahme des Schurrenausgangs wird die benötigte Zeit erweitert, damit die Nutzfahrzeuge in eine leergewordene Position der Vorderreihe nachrücken. Hierzu kann die Vorderreihe entsprechend der Anzahl der Schurrenausgänge vorteilhafterweise auch mit einer entsprechenden Anzahl von Nutzfahrzeugen ausgestattet sein. Eine Dreifachschurre bedeutet bereits, dass sich die Zeit zum Nachrücken für ein neues Nutzfahrzeug in die Vorderreihe verdoppelt. Dies bedeutet mithin, dass ein Nutzfahrzeug befüllt wird, ein zweites Nutzfahrzeug parkt und als nächstes befüllt werden kann und ein drittes Nutzfahrzeug nachrückt, wobei es die Beladung des ersten und des zweiten Nutzfahrzeugs abwarten kann. Dies ist besonders vorteilhaft, um eine kontinuierliche Beladung weitestgehend zu gewährleisten.

Das Durchfahrtregelungssystem kann insbesondere ein Ampelsystem sein. Dies ist eine besonders einfache Durchfahrtregelungsmöglichkeit. Alternativ kann auch vorteilhaft sein, dass die Durchfahrtregelung jeweils über eine Bedieneinheit in einem Nutzfahrzeug stattfindet.

Besonders vorteilhaft ist, dass das System eine Vorderreihe und zwei Folgereihen mit Nutzfahrzeugen aufweist, sodass eine erhöhte Anzahl an nachrückbaren Nutzfahrzeugen existiert. Insbesondere bei einem Ausfall eines Nutzfahrzeugs, können sich die Nutzfahrzeuge in diesem Kontext leichter ersetzen.

Weiterhin sieht eine vorzugsweise Ausführungsform vor, dass das System für die Vorderreihe und/ oder pro Folgereihe mindestens zwei, vorzugsweise drei Nutzfahrzeuge aufweist. So ist insbesondere bei einer Dreiwegschurre vorteilhaft, wenn drei Nutzfahrzeuge verwendet werden.

Die Steuerung durch das Computersystem lässt sich zur Lösung der Aufgabe noch weiter optimieren, wenn der Mehrwegschurre ein Messsystem vorgeordnet ist, das die Menge des beförderten Materials misst und die gemessenen Daten an das Computersystem weiterleitet. Somit kann besser vorhergesagt werden, wann spätestens ein Nutzfahrzeug abgefahren beziehungsweise angekommen sein muss, um eine kontinuierliche Beladung weitestgehend zu gewährleisten.

Dabei kann das System an eine Anordnung zur kontinuierlichen Materialgewinnung ankoppeln. Mit anderen Worten: Es hat sich gezeigt, dass das erfindungsgemäße System auch besonders vorteilhaft im Zusammenhang mit mobilen Mining-Geräten bzw. Fördertechnik-Anordnungen implementierbar ist, dessen Materialstrom nicht aus stationären Bins gespeist ist, sondern aus einem kontinuierlichen Gewinnungs-, Förder- und Brechprozess folgt.

Das System kann wenigstens eine Schnittstelle zwischen einerseits einer Anordnung zur kontinuierlichen Materialgewinnung und andererseits einem diskontinuierlichen Materialabtransport bereitstellen, indem der kontinuierliche Materialstrom in diskontinuierliche Materialchargen diskretisiert wird. Anders ausgedrückt: Die Erfindung beruht dabei auch auf dem Konzept, eine möglichst effiziente Schnittstelle zwischen einerseits kontinuierlichem Materialstrom (Gewinnung) und andererseits diskontinuierlichem Materialtransport mit Trucks sicherzustellen.

Weiterhin betrifft die Erfindung ein Verfahren zum Beladen von Nutzfahrzeugen mit einem System nach mindestens einem der vorgenannten Merkmale, wobei das Verfahren durch folgende Verfahrensschritte gekennzeichnet ist:
- vor und/ oder während des Beladens des ersten Nutzfahrzeugs wird der Füllstand des mindestens zweiten Nutzfahrzeugs in der Vorderreihe mittels seines Materialfüllstanderfassungssensors gemessen,
- Beladen eines einzigen, nämlich des ersten Nutzfahrzeugs mit Material durch die Mehrwegschurre, wobei der Füllstand des Nutzfahrzeugs mittels seines Materialfüllstanderfassungssensors gemessen wird,
- sofern das zweite Nutzfahrzeug eine festgelegte Füllmenge enthält, erfolgt für das zweite Nutzfahrzeug durch das ihm zugeordnete Durchfahrtregelungselement ein Freigabesignal, sodass das zweite Nutzfahrzeug von seiner derzeitigen Position abfährt,
- das dem zweiten Nutzfahrzeug entgegen seiner Fahrtrichtung und in der Folgereihe stehende, dritte Nutzfahrzeug erhält durch das ihm zugeordnete Durchfahrtregelungselement ein Freigabesignal, sodass das dritte Nutzfahrzeug von seiner derzeitigen Position in die vorherige Position des zweiten Nutzfahrzeugs fährt,
- ein Nutzfahrzeug rückt in die vorherige Position des dritten Nutzfahrzeugs in der Folgereihe nach,
- wobei die Mehrwegschurre entlang der Vorderreihe zur Beladung auf das dritte Nutzfahrzeug umschaltet, sobald der Materialfüllstanderfassungssensor des ersten Nutzfahrzeugs eine festgelegte Füllmenge enthält,
wobei das Präsenssensorsystem permanent prüft, ob ein Nutzfahrzeug in der Folgereihe vorhanden ist, damit im Anschluss an ein aus der Vorderreihe abfahrendes Nutzfahrzeug ein weiteres Nutzfahrzeug nachrücken kann. Unter Würdigung dieser wesentlichen Verfahrensschritte kann sichergestellt werden, dass eine weitestgehend kontinuierliche Beschickung von Nutzfahrzeugen erfolgt.

Reduzierte Fehlereinflüsse, insbesondere durch menschliche Bedienungsfehler, können mittels eines automatisierten Systems zu einer mit höherer Wahrscheinlichkeit kontinuierlichen Beschickung von Nutzfahrzeugen führen, wenn die Nutzfahrzeuge unbemannt fahren.

Dabei lässt sich gemäß einer bevorzugten Maßnahme die Effizienz des Verfahrens weiter optimieren, wenn das Umschalten der Mehrwegschurre durch das Computersystem ohne Karenzzeit erfolgt.

Um eine Beschädigung von Nutzfahrzeugen zu vermeiden ist vorzugsweise vorgesehen, dass die Mehrwegschurre durch das Computersystem in einen geschlossenen Betriebszustand geschaltet wird, sofern vor oder während des Beladens eines Nutzfahrzeugs durch den ihm zugeordneten Präsenssensor detektiert wird, dass das Nutzfahrzeug nicht korrekt in seiner Beladeposition steht, oder sofern das vollständig befüllte Nutzfahrzeug die festgelegte Füllmenge enthält und kein weiteres Nutzfahrzeug 2 der Vorderreihe 41 ungefüllt ist. Gefüllt bedeutet gegenüber der Bezeichnung ungefüllt insbesondere, dass das jeweilige Nutzfahrzeug keine Aufnahmekapazität mehr aufweist. Letztlich würde ein Ausfall eines Nutzfahrzeugs möglicherweise wegen des verschütteten Materials zu einer Pause der Materialbeschickung führen, wodurch Folgekosten entstünden.

Gemäß einer vorteilhaften Maßnahme des Verfahrens schaltet die Mehrwegschurre nach dem Beladen eines Nutzfahrzeuges nur dann auf ein anderes Nutzfahrzeug um, wenn der Präsenssensor des mindestens einen anderen Nutzfahrzeugs der Vorderreihe dessen Vorhandensein und seine korrekte Position zur Beladung detektiert hat. Hierdurch wird verhindert, dass Material auf den Untergrund abfällt, wodurch die anschließende Beschickung eines Nutzfahrzeugs möglicherweise erheblich verzögert werden könnte.

Die Erfindung ist bereits bei der ersten Durchführung des Verfahrens vorteilhaft. Besonders vorteilhaft werden die einzelnen Schritte allerdings stetig aufeinander folgend wiederholt.

Das Material kann beim Beladen von einer Anordnung zur kontinuierlichen Materialgewinnung abgegriffen werden und dem jeweiligen Nutzfahrzeug chargenweise zugeführt werden. Anders ausgedrückt: Das Verfahren kann zwischen einer kontinuierlichen und einer diskontinuierlichen Material-Handhabung puffern. Beim Beladen der Nutzfahrzeuge kann dabei zwischen einerseits einer Anordnung zur kontinuierlichen Materialgewinnung und andererseits einem diskontinuierlichen Materialabtransport der kontinuierliche Materialstrom in diskontinuierliche Materialchargen diskretisiert wird.

Ebenso betrifft die Erfindung eine Bedieneinheit für ein Nutzfahrzeug zur Durchführung des Verfahrens nach einem der vorhergehenden Merkmale, wobei die Bedieneinheit kabellos mit dem Computersystem kommuniziert. Somit kann ein flexibler Einsatz der Nutzfahrzeuge gewährleistet werden.

Weiterhin ist bevorzugt, dass die Bedieneinheit als Nachrüsteinheit ausgebildet ist.

### FIGURENBESCHREIBUNG

- Figur 1: Schematische Draufsicht auf ein System zum kontinuierlichen Beladen von Nutzfahrzeugen als Ausführungsbeispiel der Erfindung,
- Figur 2: System nach Figur 1 in einem nächsten Verfahrensschritt,
- Figur 3: System nach Figur 2 in einem nächsten Verfahrensschritt,
- Figur 4: System nach Figur 3 in einem nächsten Verfahrensschritt,
- Figur 5: System nach Figur 4 in einem nächsten Verfahrensschritt und
- Figur 6: System nach Figur 5 in einem nächsten Verfahrensschritt.

### DETAILLIERTE BESCHREIBUNG DER FIGUREN

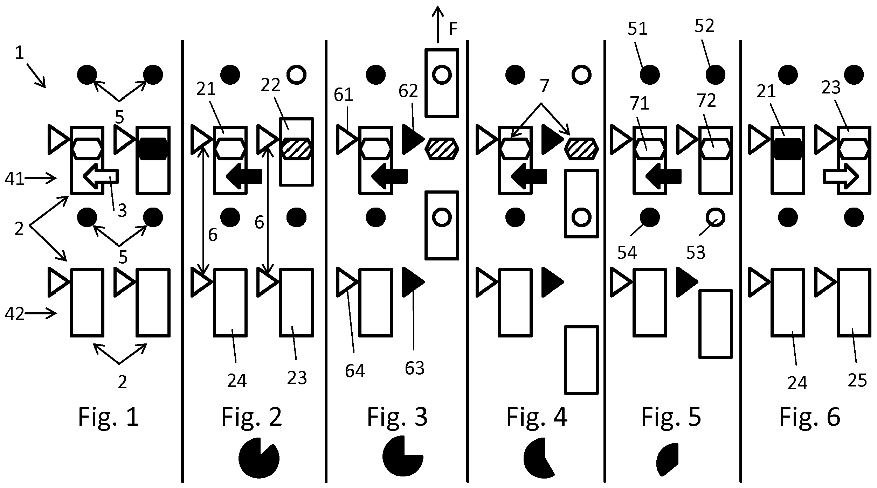

In den Fig. 1 bis Fig. 6 sind jeweils schematische Draufsichten auf ein bevorzugt ausgebildetes System 1 zum kontinuierlichen Beladen von Nutzfahrzeugen 2 in unterschiedlichen Verfahrensschritten als ein Ausführungsbeispiel dargestellt. Dabei sind die Bezugszeichen aus Gründen der Übersicht über die sechs Figuren verteilt dargestellt, gelten allerdings jeweils für jede Figur. Sämtliche Komponenten des Systems sind schematisch dargestellt.

Insgesamt umfasst das bevorzugt ausgebildete System 1 mindestens eine in unterschiedliche Schaltzustände schaltbare Mehrwegschurre 3. Die Mehrwegschurre 3 ist vorgesehen, um unterschiedliche Nutzfahrzeuge 2 nacheinander mit Material zu beschicken, wobei die Mehrwegschurre insbesondere eine Hosenschurre ist.

Das dargestellte System umfasst vier Nutzfahrzeuge 21, 22, 23, 24, wobei diese Nutzfahrzeuge 21, 22, 23, 24 in zwei Reihen 41, 42 angeordnet sind, nämlich nach Fig. 1 zwei Nutzfahrzeuge 21, 22 in einer Vorderreihe 41 und zwei Nutzfahrzeuge 23, 24 in einer Folgereihe 42. Die Nutzfahrzeuge 23, 24 der Folgereihe 42 stehen ungefüllt den Nutzfahrzeugen 21, 22 der Vorderreihe 41 entgegen ihrer Fahrtrichtung F an. Ungefüllt bedeutet, dass Nutzfahrzeuge 23, 24 Aufnahmekapazitäten zur Beschickung mit Material durch die Mehrwegschurre 3 aufweisen. Somit sind die Nutzfahrzeuge 21, 22, 23, 24 anders formuliert in einer zwei Mal zwei Anordnung positioniert, wobei die Nutzfahrzeuge 23, 24 der Folgereihe 42 leer in Bezug auf Material sind.

Die numerische Formulierung der Nutzfahrzeuge, nämlich insbesondere erste, zweite und dritte Nutzfahrzeuge, ist nicht limitierend zu verstehen, sondern soll das Verständnis der Figuren erleichtern. Sobald sich der Prozess wiederholt, ist die numerische Folge grundsätzlich hinfällig. Es handelt sich um baugleiche Nutzfahrzeuge, sodass diese Formulierung mit aufsteigender Nummerierung nur genutzt wird, um die Erfindung deutlicher zu beschreiben, insbesondere in den Figuren.

Durch diese Konstellation der beiden Nutzfahrzeuge 21, 22 der Vorderreihe 41 ist die Mehrwegschurre 3 als Zweifachschurre ausgebildet. Dabei sind nur die Nutzfahrzeuge 21, 22 der Vorderreihe 41 durch die Zweifachschurre 3 mit Material zu beschicken.

Weiterhin weist das System 1 ein Durchfahrtregelungssystem 5 auf. Dabei ist jedem Nutzfahrzeug 21, 22, 23, 24 ein Durchfahrtregelungselement 51, 52, 53, 54 zugeordnet. Bevorzugt kann das Durchfahrtregelungssystem 5 ein Ampelsystem sein, wobei jedes Durchfahrtregelungselement 51, 52, 53, 54 insbesondere eine separate Ampelanlage ist. Allerdings kann das Signal zur Durchfahrtregelung beispielhaft auch innerhalb des Fahrzeugs durch eine Bedieneinheit erfolgen.

Ebenso umfasst das System ein Präsenssensorsystem 6, wobei jedem Nutzfahrzeug 21, 22, 23, 24 ein Präsenssensor 61, 62, 63, 64 zugeordnet ist. Das Präsenssensorsystem 6 dient der Erfassung, ob und wo die jeweiligen Nutzfahrzeuge 2 zur Beladung mit Material bereitstehen.

Auch schematisch dargestellt ist ein Materialfüllstanderfassungssystem 7 als Bestandteil des Systems 1, wobei jedem Nutzfahrzeug 21, 22 der Vorderreihe 41 ein Materialfüllstanderfassungssensor 71, 72 zugeordnet ist. Somit kann die Mehrwegschurre 3 auf ein ungefülltes Nutzfahrzeug 21 umgeschaltet werden, sobald das Nutzfahrzeug 22 gefüllt ist, siehe Fig. 1 und 2.

Die Steuerung der Mehrwegschurre erfolgt über ein nicht dargestelltes Computersystem. Vorzugsweise wird der Schaltzustand der Mehrwegschurre 3 anhand der Daten des Präsenssensorsystems 6 und des Materialfüllstanderfassungssystems 7 gesteuert. Insbesondere ist vorgesehen, dass der Mehrwegschurre 3 ein nicht dargestelltes Messsystem vorgeordnet ist, das die Menge des beförderten Materials misst und die gemessenen Daten an das Computersystem weiterleitet. Daraufhin kann die Beladungsgeschwindigkeit beziehungsweise Beladungsmenge des zu beladenden Nutzfahrzeugs 2 weitestgehend vorhergesagt werden.

In Fig. 1 ist mithilfe des leer dargestellten Materialfüllstanderfassungssensors 71 gezeigt, dass das erste Nutzfahrzeug 71 ungefüllt ist. Die Mehrfachschurre 3 ist auf das erste Nutzfahrzeug geschaltet, allerdings erfolgt kein Materialfluss. Erkennbar ist dies an dem schematisch leeren Pfeil. Das zweite Nutzfahrzeug 22 ist mit Material gefüllt. Dies ist daran erkennbar, dass sein Materialfüllstanderfassungssensor 72 gefüllt dargestellt ist. Alle vier Nutzfahrzeuge 21, 22, 23, 24 haben ein Signal stehen zu bleiben. Erkennbar an den gefüllt dargestellten Durchfahrtregelungselementen 51, 52, 53, 54 des Durchfahrtregelungssystems 5. Alle vier Nutzfahrzeuge 21, 22, 23, 24 sind präsent und in ihrer jeweils richtigen Position. Erkennbar an den leer dargestellten Präsenssensoren 61, 62, 63, 64 des Präsenssensorsystems 6.

Grundsätzlich ist vorgesehen, dass vor und/ oder während und/ oder nach dem Beladen des ersten Nutzfahrzeugs 21 der Füllstand des zweiten Nutzfahrzeugs 22 in der Vorderreihe 41 mittels seines Materialfüllstanderfassungssensors 72 gemessen wird, siehe Fig. 1. Dies dient dazu, dass sichergestellt ist, dass das der Materialfluss der Mehrwegschurre 3 nach dem Füllen des ersten Nutzfahrzeugs 21 nicht auf ein bereits gefülltes Nutzfahrzeug 21 geschaltet wird. Nach Fig. 1 ist das zweite Nutzfahrzeug 22 durch seinen Materialfüllstanderfassungssensor 72 als gefüllt detektiert worden. Das nach Fig. 1 als gefüllt detektierte, zweite Nutzfahrzeug 22 erhält von dem ihm zugeordneten Durchfahrtregelungselement 52 das Freigabesignal abzufahren. Daraufhin schaltet der Materialfüllstanderfassungssensor 72 des ursprünglich zweiten Nutzfahrzeugs 22 in einen messbereiten Zustand. Schematisch ist dies mit dem schraffierten Inhalt des Materialfüllstanderfassungssensors 72 dargestellt, siehe Fig. 2.

Nach der Darstellung von Fig. 2 erfolgt gleichzeitig mit der Abfahrt des gefüllten, zweiten Nutzfahrzeugs 22 ein Beladen des ersten Nutzfahrzeugs 21 mit Material durch die Mehrwegschurre 3, wobei der Füllstand des ersten Nutzfahrzeugs 21 mittels seines Materialfüllstanderfassungssensors 71 gemessen wird. Dass das erste Nutzfahrzeug 21 noch nicht vollständig gefüllt ist, ist an dem leer dargestellten Materialfüllstanderfassungssensor 71 erkennbar.

Um sicherzustellen, dass die Mehrwegschurre 3 ohne Karenzpause auf ein anderes Nutzfahrzeug 2 umschalten kann, sobald das erste Nutzfahrzeug 21 gefüllt ist, erfolgt zeitgleich während des Befüllens ein Austausch des befüllten, zweiten Nutzfahrzeugs 22 gegen ein ungefülltes, drittes Nutzfahrzeug 23. Dies erfolgt während der Verfahrensschritte der Fig. 2 bis 5 und ist schematisch mittels der ablaufenden Uhr dargestellt.

Das dem zweiten Nutzfahrzeug 22 entgegen seiner Fahrtrichtung F und in der Folgereihe 42 stehende, dritte Nutzfahrzeug 23 erhält nach Fig. 3 durch das ihm zugeordnete Durchfahrtregelungselement 53 ein Freigabesignal, sodass das dritte Nutzfahrzeug 23 von seiner derzeitigen Position in die vorherige Position des zweiten Nutzfahrzeugs 22 fährt, sobald genug Platz durch das abfahrende, zweite Nutzfahrzeug 22 für das dritte Nutzfahrzeug 23 vorhanden ist.

Die Präsenssensoren 62, 63 des zweiten und dritten Nutzfahrzeugs 22, 23 detektieren, dass kein Nutzfahrzeug an der vorgesehenen Position angeordnet ist.

Während das dritte Nutzfahrzeug 23 die vorherige Position des zweiten Nutzfahrzeuges in der Vorderreihe 41 einnimmt, rückt nach den Fig. 4 bis 6 ein Nutzfahrzeug 25 in die vorherige Position des dritten Nutzfahrzeugs 23 in der Folgereihe 42 nach.

In Fig. 5 ist zu erkennen, dass der Materialfüllstanderfassungssensor 72 den ungefüllten Zustand des Nutzfahrzeuges 2 detektiert. Der Positionssensor 62 detektiert, dass bereits ein Nutzfahrzeug 2 in der Vorderreihe 41 bereitsteht, wohingegen der Positionssensor 63 detektiert, dass in der Folgereihe 42 noch kein Nutzfahrzeug 2 bereitsteht.

Nach Fig. 6 schaltet die Mehrwegschurre 3 entlang der Vorderreihe 41 zur Beladung auf das dritte Nutzfahrzeug 23 um, sobald der Materialfüllstanderfassungssensor 71 des ersten Nutzfahrzeugs 21 eine festgelegte Füllmenge enthält.

Fig. 6 stellt nun eine ähnliche Ausgangsposition für den nächsten Verfahrensschritt dar wie Fig. 1 für Fig. 2. Anders gesagt, können sich die Verfahrensschritte der Fig. 2 bis Fig. 5 wiederholen, wobei die Beladung lediglich spiegelsymmetrisch erfolgt.

### Bezugszeichenliste

- 1: System zum kontinuierlichen Beladen von Nutzfahrzeugen
- 2: Nutzfahrzeug
- 21: Erstes Nutzfahrzeug
- 22: Zweites Nutzfahrzeug
- 23: Drittes Nutzfahrzeug
- 24: Viertes Nutzfahrzeug
- 3: Mehrwegschurre
- 41: Vorderreihe
- 42: Folgereihe
- 5: Durchfahrtregelungssystem
- 51: Durchfahrtregelungselement des ersten Nutzfahrzeugs
- 52: Durchfahrtregelungselement des zweiten Nutzfahrzeugs
- 53: Durchfahrtregelungselement des dritten Nutzfahrzeugs
- 54: Durchfahrtregelungselement vierten Nutzfahrzeugs
- 6: Präsenssensorsystem
- 61: Präsenssensor des ersten Nutzfahrzeugs
- 62: Präsenssensor des zweiten Nutzfahrzeugs
- 63: Präsenssensor des dritten Nutzfahrzeugs
- 64: Präsenssensor des vierten Nutzfahrzeugs
- 7: Materialfüllstanderfassungssystem
- 71: Materialfüllstanderfassungssensor des ersten Nutzfahrzeugs
- 72: Materialfüllstanderfassungssensor des zweiten Nutzfahrzeugs

- F: Fahrtrichtung des Nutzfahrzeugs

## Patentansprüche

1. System zum kontinuierlichen Beladen von Nutzfahrzeugen (2) mit Material, aufweisend:
- mindestens eine in unterschiedliche Schaltzustände schaltbare Mehrwegschurre (3), um unterschiedliche Nutzfahrzeuge (2) nacheinander mit Material zu beschicken,
- mindestens drei Nutzfahrzeuge (21, 22, 23, 24), wobei die Nutzfahrzeuge (21, 22, 23, 24) in mindestens zwei Reihen (41, 42) angeordnet sind, nämlich mindestens zwei Nutzfahrzeuge (21, 22) in einer Vorderreihe (41) und mindestens ein Nutzfahrzeug (23, 24) in mindestens einer Folgereihe (42), wobei mindestens einem Nutzfahrzeug (21, 22) der Vorderreihe (41) entgegen seiner Fahrtrichtung (F) das mindestens eine Nutzfahrzeug (23, 24) ungefüllt in der mindestens einen Folgereihe (42) ansteht,
- ein Durchfahrtregelungssystem (5), wobei jedem Nutzfahrzeug (21, 22, 23, 24) ein Durchfahrtregelungselement (51, 52, 53, 54) zugeordnet ist,
- ein Präsenssensorsystem (6), wobei jedem Nutzfahrzeug (21, 22, 23, 24) ein Präsenssensor (61, 62, 63, 64) zugeordnet ist,
- ein Materialfüllstanderfassungssystem (7), wobei jedem Nutzfahrzeug (21, 22) der Vorderreihe (41) ein Materialfüllstanderfassungssensor (71, 72) zugeordnet ist und
- ein Computersystem, um den Schaltzustand der Mehrwegschurre (3) anhand der Daten des Präsenssensorsystems (6) und des Materialfüllstanderfassungssystems (7) zu steuern.

2. System nach Anspruch 1, **dadurch gekennzeichnet, dass** nur die Nutzfahrzeuge (21, 22) der Vorderreihe (41) durch die Mehrfachschurre (3) mit Material zu beschicken sind.

3. System nach Anspruch 1 oder 2, **dadurch gekennzeichnet, dass** die Mehrfachschurre (3) eine Zweifachschurre, eine Dreifachschurre oder eine Vierfachschurre ist.

4. System nach mindestens einem der vorgenannten Ansprüche,
**dadurch gekennzeichnet, dass** das System (1) eine Vorderreihe (41) und zwei Folgereihen (42) mit Nutzfahrzeugen (2) aufweist.

5. System nach mindestens einem der vorgenannten Ansprüche,
**dadurch gekennzeichnet, dass** das System (1) für die Vorderreihe (41) und/ oder pro Folgereihe (42) mindestens zwei, vorzugsweise drei Nutzfahrzeuge (2) aufweist.

6. System nach mindestens einem der vorgenannten Ansprüche,
**dadurch gekennzeichnet, dass** der Mehrwegschurre (3) ein Messsystem vorgeordnet ist, das die Menge des beförderten Materials misst und die gemessenen Daten an das Computersystem weiterleitet.

7. System nach mindestens einem der vorgenannten Ansprüche,
**dadurch gekennzeichnet, dass** das System an eine Anordnung zur kontinuierlichen Materialgewinnung ankoppelt.

8. System nach mindestens einem der vorgenannten Ansprüche,
**dadurch gekennzeichnet, dass** das System wenigstens eine Schnittstelle zwischen einerseits einer Anordnung zur kontinuierlichen Materialgewinnung und andererseits einem diskontinuierlichen Materialabtransport bereitstellt, indem der kontinuierliche Materialstrom in diskontinuierliche Materialchargen diskretisiert wird.

9. Verfahren zum Beladen von Nutzfahrzeugen (2) mit einem System (1) nach mindestens einem der vorgenannten Ansprüche, wobei das Verfahren durch folgende Verfahrensschritte gekennzeichnet ist:
- vor und/ oder während des Beladens des ersten Nutzfahrzeugs (21) wird der Füllstand des mindestens zweiten Nutzfahrzeugs (22) in der Vorderreihe (41) mittels seines Materialfüllstanderfassungssensors (72) gemessen,
- Beladen eines einzigen, nämlich des ersten Nutzfahrzeugs (21) mit Material durch die Mehrwegschurre (3), wobei der Füllstand des Nutzfahrzeugs (21) mittels seines Materialfüllstanderfassungssensors (71) gemessen wird,
- sofern das zweite Nutzfahrzeug (22) eine festgelegte Füllmenge enthält, erfolgt für das zweite Nutzfahrzeug (22) durch das ihm zugeordnete Durchfahrtregelungselement (52) ein Freigabesignal, sodass das zweite Nutzfahrzeug (22) von seiner derzeitigen Position abfährt,
- das dem zweiten Nutzfahrzeug (22) entgegen seiner Fahrtrichtung (F) und in der Folgereihe (42) stehende, dritte Nutzfahrzeug (23) erhält durch das ihm zugeordnete Durchfahrtregelungselement (53) ein Freigabesignal, sodass das dritte Nutzfahrzeug (23) von seiner derzeitigen Position in die vorherige Position des zweiten Nutzfahrzeugs (22) fährt,
- ein Nutzfahrzeug (25) rückt in die vorherige Position des dritten Nutzfahrzeugs (23) in der Folgereihe (42) nach,
- wobei die Mehrwegschurre (3) entlang der Vorderreihe (41) zur Beladung auf das dritte Nutzfahrzeug (23) umschaltet, sobald der Materialfüllstanderfassungssensor (71) des ersten Nutzfahrzeugs (21) eine festgelegte Füllmenge enthält,
wobei das Präsenssensorsystem (5) permanent prüft, ob ein Nutzfahrzeug (2) in der Folgereihe (42) vorhanden ist, um im Anschluss an ein aus der Vorderreihe (41) abfahrendes Nutzfahrzeug (2) ein weiteres Nutzfahrzeug (2) nachzurücken.

10. Verfahren nach Anspruch 9, **dadurch gekennzeichnet, dass** die Nutzfahrzeuge (2) unbemannt fahren.

11. Verfahren nach Anspruch 9 oder 10, **dadurch gekennzeichnet, dass** das Umschalten der Mehrwegschurre (3) durch das Computersystem ohne Karenzzeit erfolgt.

12. Verfahren nach mindestens einem der Ansprüche 9 bis 11,
**dadurch gekennzeichnet, dass** die Mehrwegschurre (3) durch das Computersystem in einen geschlossenen Betriebszustand geschaltet wird, sofern vor oder während des Beladens eines Nutzfahrzeugs (2) durch den ihm zugeordneten Präsenssensor (7) detektiert wird, dass das Nutzfahrzeug (2) nicht korrekt in seiner Beladeposition steht oder sofern das vollständig befüllte Nutzfahrzeug (2) die festgelegte Füllmenge enthält und kein weiteres Nutzfahrzeug (2) der Vorderreihe (41) ungefüllt ist.

13. Verfahren nach mindestens einem der Ansprüche 9 bis 12,
**dadurch gekennzeichnet, dass** die Mehrwegschurre (3) nach dem Beladen eines Nutzfahrzeuges (2) nur dann auf ein anderes Nutzfahrzeug (2) umschaltet, wenn der Präsenssensor (7) des mindestens einen anderen Nutzfahrzeugs (2) der Vorderreihe (41) dessen Vorhandensein und seine korrekte Position zur Beladung detektiert hat.

14. Verfahren nach mindestens einem der Ansprüche 9 bis 13,
**dadurch gekennzeichnet, dass** einzelnen Schritte wiederholt werden.

15. Verfahren nach mindestens einem der Ansprüche 9 bis 14, **dadurch gekennzeichnet, dass** das Material beim Beladen von einer Anordnung zur kontinuierlichen Materialgewinnung abgegriffen wird und dem jeweiligen Nutzfahrzeug chargenweise zugeführt wird.

16. Verfahren nach mindestens einem der Ansprüche 9 bis 15, **dadurch gekennzeichnet, dass** beim Beladen der Nutzfahrzeuge zwischen einerseits einer Anordnung zur kontinuierlichen Materialgewinnung und andererseits einem diskontinuierlichen Materialabtransport der kontinuierliche Materialstrom in diskontinuierliche Materialchargen diskretisiert wird.

## Claims

1. A system for continuously loading utility vehicles (2) with material, having:
- at least one multiple chute (3) which can be switched into different switching states in order to load different utility vehicles (2) successively with material,
- at least three utility vehicles (21, 22, 23, 24), wherein the utility vehicles (21, 22, 23, 24) are arranged in at least two rows (41, 42), specifically at least two utility vehicles (21, 22) in a front row (41) and at least one utility vehicle (23, 24) in at least one subsequent row (42), wherein at least one utility vehicle (21, 22) in the front row (41) is followed, counter to its direction of travel (F), by the at least one utility vehicle (23, 24) unfilled in the at least one subsequent row (42).
- a drive-through control system (5), wherein each utility vehicle (21, 22, 23, 24) is assigned a drive-through control element (51, 52, 53, 54),
- a presence sensor system (6), wherein each utility vehicle (21, 22, 23, 24) is assigned a presence sensor (61, 62, 63, 64),
- a material filling level detection system (7), wherein each utility vehicle (21, 22) in the front row (41) is assigned a material filling level detection sensor (71, 72) and
- a computer system for controlling the switching status of the multiple chute (3) on the basis of the data from the presence sensor system (6) and of the material filling level detection system (7).

2. The system according to claim 1, **characterized in that** only the utility vehicles (21, 22) in the front row (41) are to be loaded with material by the multiple chute (3).

3. The system according to claim 1 or 2, **characterized in that** the multiple chute (3) is a double chute, triple chute or a quadruple chute.

4. The system according to at least one of the preceding claims,
**characterized in that** the system (1) has a front row (41) and two subsequent rows (42) with utility vehicles (2).

5. The system according to at least one of the preceding claims, **characterized in that** the system (1) has at least two, preferably three, utility vehicles (2) for the front row (41) and/or per subsequent row (42).

6. The system according to at least one of the preceding claims, **characterized in that** a measuring system which measures the quantity of the conveyed material and passes on the measured data to the computer system is arranged upstream of the multiple chute (3).

7. The system according to at least one of the preceding claims, **characterized in that** the system couples to an arrangement for the continuous acquisition of material.

8. The system according to at least one of the preceding claims, **characterized in that** the system provides at least one interface between, on the one hand, an arrangement for the continuous acquisition of material and, on the other hand, a discontinuous material removal means, **in that** the continuous stream of material is discretized into discontinuous batches of material.

9. A method for loading utility vehicles (2) with a system (1) according to at least one of the preceding claims, wherein the method is **characterized by** the following method steps:
- before and/or during the loading of the first utility vehicle (21), the filling level of the at least second utility vehicle (22) in the front row (41) is measured by means of its material filling level detection sensor (72),
- loading a single utility vehicle (21), specifically the first one, with material by means of the multiple chute (3), wherein the filling level of the utility vehicle (21) is measured by means of its material filling level detection sensor (71),
- if the second utility vehicle (22) contains a defined filling quantity, a release signal is issued for the second utility vehicle (22) by the drive-through control element (52) assigned to it, so that the second utility vehicle (22) moves away from its current position,
- the third utility vehicle (23) which follows the second utility vehicle (22) counter to its direction of travel (F) and in the subsequent row (42) receives, from the drive-through control element (53) assigned to it, a release signal so that the third utility vehicle (23) moves from its current position into the previous position of the second utility vehicle (22),
- a utility vehicle (25) moves up into the previous position of the third utility vehicle (23) in the subsequent row (42),
- wherein the multiple chute (3) switches over to the third utility vehicle (23) along the front row (41) for the purpose of loading, as soon as the material filling level detection sensor (71) of the first utility vehicle (21) contains a defined filling quantity,
wherein the presence sensor system (5) checks continually whether there is a utility vehicle (2) in the subsequent row (42), in order to move up a further utility vehicle (2) subsequent to a utility vehicle (2) which moves away out of the front row (41).

10. The method according to claim 9, **characterized in that** the utility vehicles (2) travel unmanned.

11. The method according to claim 9 or 10, **characterized in that** the switching of the multiple chute (3) is carried out by the computer system without a waiting time.

12. The method according to at least one of claims 9 to 11,
**characterized in that** the multiple chute (3) is switched into a closed operating state by the computer system provided that before or during the loading of a utility vehicle (2), the presence sensor (7) assigned to said vehicle detects that the utility vehicle (2) is not correctly located in its loading position or provided that the completely filled utility vehicle (2) contains the defined filling quantity and no further utility vehicle (2) in the front row (41) is unfilled.

13. The method according to at least one of claims 9 to 12,
**characterized in that** after the loading of a utility vehicle (2) the multiple chute (3) switches to another utility vehicle (2) only when the presence sensor (7) of the at least one other utility vehicle (2) in the front row (41) has detected its presence and its correct position for loading.

14. The method according to at least one of claims 9 to 13,
**characterized in that** individual steps are repeated.

15. The method according to at least one of claims 9 to 14, **characterized in that** during the loading of an arrangement for the continuous acquisition of material, the material is picked up and fed in batches to the respective utility vehicle.

16. The method according to at least one of claims 9 to 15, **characterized in that** during the loading of the utility vehicles between, on the one hand, an arrangement for the continuous acquisition of material and, on the other hand, a discontinuous material removal means, the continuous stream of material is discretized into discontinuous batches of material.

## Revendications

1. Système de charge continuelle de véhicules utilitaires (2) avec des matériaux, présentant :
- au moins une goulotte à voies multiples (3) pouvant être commutée dans différents états de commutation, afin de charger successivement différents véhicules utilitaires (2) avec des matériaux,
- au moins trois véhicules utilitaires (21, 22, 23, 24), dans lequel les véhicules utilitaires (21, 22, 23, 24) sont agencés en au moins deux rangées (41, 42), notamment au moins deux véhicules utilitaires (21, 22) dans une rangée avant (41) et au moins un véhicule utilitaire (23, 24) dans au moins une rangée suivante (42), dans lequel au moins un véhicule utilitaire (21, 22) de la rangée avant (41) est suivi, dans le sens opposé à son sens de déplacement (F), du au moins un véhicule utilitaire (23, 24) non rempli dans la au moins une rangée suivante (42),
- un système de contrôle de passage (5), dans lequel un élément de contrôle de passage (51, 52, 53, 54) est associé à chaque véhicule utilitaire (21, 22, 23, 24),
- un système de capteurs de présence (6), dans lequel un capteur de présence (61, 62, 63, 64) est associé à chaque véhicule utilitaire (21, 22, 23, 24),
- un système de détection de niveau de remplissage de matériau (7), dans lequel un capteur de détection de niveau de remplissage de matériau (71, 72) est associé à chaque véhicule utilitaire (21, 22) de la rangée avant (41) et
- un système informatique pour commander l'état de commutation de la goulotte à voies multiples (3) sur la base des données du système de capteur de présence (6) et du système de détection de niveau de remplissage de matériau (7).

2. Système selon la revendication 1, **caractérisé en ce que** seuls les véhicules utilitaires (21, 22) de la rangée avant (41) doivent être chargés en matériaux par la goulotte à voies multiples (3).

3. Système selon la revendication 1 ou 2, **caractérisé en ce que** la goulotte à voies multiples (3) est une goulotte à deux voies, une goulotte à trois voies ou une goulotte à quatre voies.

4. Système selon au moins l'une quelconque des revendications précédentes,
**caractérisé en ce que** le système (1) présente une rangée avant (41) et deux rangées suivantes (42) avec des véhicules utilitaires (2).

5. Système selon au moins l'une quelconque des revendications précédentes, **caractérisé en ce que** le système (1) présente au moins deux, de préférence trois véhicules utilitaires (2) pour la rangée avant (41) et/ou par rangée suivante (42).

6. Système selon au moins l'une quelconque des revendications précédentes, **caractérisé en ce que** la goulotte à voies multiples (3) est précédée d'un système de mesure qui mesure la quantité de matériau transporté et transmet les données mesurées au système informatique.

7. Système selon au moins l'une quelconque des revendications précédentes, **caractérisé en ce que** le système est couplé à un agencement pour l'extraction de matériau continuelle.

8. Système selon au moins l'une quelconque des revendications précédentes, **caractérisé en ce que** le système fournit au moins une intersection entre, d'une part, un agencement d'extraction de matériau continuelle et, d'autre part, une évacuation de matériau discontinue, en discrétisant le flux de matériau continuel en lots de matériau discontinus.

9. Procédé de charge de véhicules utilitaires (2) avec un système (1) selon au moins l'une quelconque des revendications précédentes, dans lequel le procédé est **caractérisé par** les étapes de procédé suivantes :
- avant et/ou pendant la charge du premier véhicule utilitaire (21), le niveau de remplissage du au moins deuxième véhicule utilitaire (22) dans la rangée avant (41) est mesuré au moyen de son capteur de détection de niveau de remplissage de matériau (72),
- la charge d'un seul, spécifiquement premier véhicule utilitaire (21), en matériaux par la goulotte à voies multiples (3), dans lequel le niveau de remplissage du véhicule utilitaire (21) est mesuré au moyen de son capteur de détection de niveau de remplissage de matériau (71),
- dans la mesure où le deuxième véhicule utilitaire (22) contient une quantité de remplissage déterminée, un signal d'autorisation est émis pour le deuxième véhicule utilitaire (22) par l'élément de contrôle de passage (52) qui lui est associé, de sorte que le deuxième véhicule utilitaire (22) quitte sa position actuelle,
- le troisième véhicule utilitaire (23) qui suit le deuxième véhicule utilitaire (22) à l'opposé de sa direction de déplacement (F) et dans la rangée suivante (42), reçoit un signal d'autorisation de l'élément de régulation de passage (53) qui lui est associé, de sorte que le troisième véhicule utilitaire (23) passe de sa position actuelle à la position précédente du deuxième véhicule utilitaire (22),
- un véhicule utilitaire (25) se déplace vers la position précédente du troisième véhicule utilitaire (23) dans la rangée suivante (42),
- dans lequel la goulotte à voies multiples (3) commute le long de la rangée avant (41) vers le troisième véhicule utilitaire (23) afin de le charger dès que le capteur de détection de niveau de remplissage de matériau (71) du premier véhicule utilitaire (21) contient une quantité de remplissage déterminée,
dans lequel le système de capteurs de présence (5) vérifie en permanence si un véhicule utilitaire (2) est présent dans la rangée suivante (42), afin de faire avancer un autre véhicule utilitaire (2) consécutivement à un véhicule utilitaire (2) quittant la rangée avant (41).

10. Procédé selon la revendication 9, **caractérisé en ce que** les véhicules utilitaires (2) circulent sans conducteur.

11. Procédé selon la revendication 9 ou 10, **caractérisé en ce que** la commutation de la goulotte à voies multiples (3) est effectuée par le système informatique sans délai d'attente.

12. Procédé selon au moins l'une quelconque des revendications 9 à 11,
**caractérisé en ce que** la goulotte à voies multiples (3) est commutée par le système informatique dans un état de fonctionnement fermé dans la mesure où, avant ou pendant la charge d'un véhicule utilitaire (2), le capteur de présence (7) associé au véhicule détecte que le véhicule utilitaire (2) ne se trouve pas correctement dans sa position de charge ou dans la mesure où le véhicule utilitaire (2) entièrement rempli contient la quantité de remplissage déterminée et qu'aucun autre véhicule utilitaire (2) de la rangée avant (41) n'est non rempli.

13. Procédé selon au moins l'une quelconque des revendications 9 à 12,
**caractérisé en ce que** la goulotte à voies multiples (3) ne commute vers un autre véhicule utilitaire (2) après la charge d'un véhicule utilitaire (2) que si le capteur de présence (7) de l'au moins un autre véhicule utilitaire (2) de la rangée avant (41) a détecté sa présence et sa position correcte pour la charge.

14. Procédé selon au moins l'une quelconque des revendications 9 à 13,
**caractérisé en ce que** des étapes individuelles sont répétées.

15. Procédé selon au moins l'une quelconque des revendications 9 à 14, **caractérisé en ce que** lors de la charge par un agencement destiné à l'extraction du matériau continuelle, le matériau est prélevé et est acheminé par lots vers le véhicule utilitaire respectif.

16. Procédé selon au moins l'une quelconque des revendications 9 à 15, **caractérisé en ce que** lors de la charge des véhicules utilitaires entre, d'une part, un agencement d'extraction de matériau continuelle et, d'autre part, une évacuation de matériau discontinue, le flux de matériau continuel est discrétisé en lots de matériau discontinus.
